# EUROPEAN PATENT APPLICATION

(11) **EP 3 845 907 A1**
(43) Date of publication of application: **07.07.2021**
(21) Application number: 19855591.4
(22) Date of filing: 04.07.2019
(51) Int. Cl.: G01N 35/02, G01N 35/00

(54) **AUTOMATIC ANALYSIS DEVICE**

(30) Priority: 29.08.2018 JP 2018160244
(71) Applicant: Hitachi High-Tech Corporation, Minato-ku Tokyo 105-6409 (JP)
(72) Inventor: UMEKI, Hiroya, Tokyo 105-6409 (JP); OKUSA, Takenori, Tokyo 105-6409 (JP); SASAKI, Shunsuke, Tokyo 105-6409 (JP); IMAI, Kenta, Tokyo 105-6409 (JP); FUJITA, Hiroki, Tokyo 105-6409 (JP)
(74) Representative: MERH-IP Matias Erny Reichl Hoffmann Patentanwälte PartG mbB
(86) International application number: PCT/JP2019/026612
(87) International publication number: WO 2020/044790

(57) **Abstract**

Provided is an automatic analyzer in which a consumable is appropriately managed and efficiently used.

An automatic analyzer includes: a housing container holder portion that holds a housing container housing a consumable; a transport mechanism that transports the consumable housed in the housing container; and a controller, in which the housing container contains a first consumable and a second consumable, and the controller determines a usage state of the housing container relating to the first consumable and a usage state of the housing container relating to the second consumable, determines whether or not the first consumable housed in the-housing container is usable based on the usage state of the housing container relating to the first consumable, and determines whether or not the second consumable housed in the housing container is usable based on the usage state of the housing container relating to the second consumable.

## Description

### Technical Field

The present invention relates to an automatic analyzer.

### Background Art

In an automatic analyzer, if a reagent set in the automatic analyzer is insufficient during analysis, the analysis is stopped and the analysis efficiency is lowered. For this reason, when a reagent shortage is likely to occur, a warning regarding the reagent shortage is issued to prevent a situation where an operation of the automatic analyzer needs to be stopped in order to replenish or replace the reagent during analysis. Patent Literature 1 describes an automatic analyzer in which a loading system that allows reagent containers to be mounted inside is provided on a part of a fixed disk, so that any of the reagent containers can be changed for the reagent used for analysis regardless of an operating state of the reagent fixed disk.

In an automatic analyzer for immunoassay, which requires strict management over contamination between samples, dispensing tips used for dispensing samples and reaction containers are used as disposable consumables. These consumables are also supplied by a user to the automatic analyzer, but it is necessary to supply these consumables of a requested number of measurements or more into the automatic analyzer, and the measurement will stop when there is a shortage.

### Citation List

### Patent Literature

Patent Literature 1: JP-A-2012-189611

### Summary of Invention

### Technical Problem

In order to avoid measurement stop caused by the consumable shortage, the automatic analyzer is required to allow a user to supply the consumable to the automatic analyzer even when the automatic analyzer is in a measurement operation. Furthermore, in order to prevent the shortage caused by delay in supply of the consumable, the automatic analyzer is required to manage a remaining amount of the consumable in real-time, and further, display information of the remaining amount of the consumable on a GUI, so that the user can always check the remaining amount.

The above is important from a viewpoint of not reducing the analysis efficiency, but it is also necessary to appropriately manage and efficiently use the consumable. Here, efficient use means avoiding a situation where the consumable is discarded without being used, or an old consumable is left and used in a deteriorated state.

In an automatic analyzer in the related art, the remaining amount of the consumable after the end of an analysis measurement may not be stored. In this case, since a usage state of the consumable is reset at the end of the measurement, the consumable is always transported from a leading housing position of a housing container at the start of the measurement. Therefore, in a case where not all the consumables filled in the housing container are consumed in a previous measurement, it is necessary to replace the housing container with a new one (a state where a housing container is completely filled with unused consumables) in preparation for a next measurement, or the user needs to manually refill the housing container with unused consumables (consumables that are not consumed in the previous measurement) in order from the leading housing position of the housing container as much as necessary for measurement. In the former case, the consumable loss occurs and the housing container of the consumable is replaced more frequently. The latter case is not desirable from a viewpoint of reliability of an analysis result because the old consumable may remain on the housing container and the remained consumable may be used for the analysis depending on the situation.

Further, in an automatic analyzer in which multiple types of consumables are housed in the same housing container, the amounts of multiple types of consumables used in analysis or a timing at which a remaining amount of the consumable is zero may differ depending on conditions. For example, when a measurement that requires multi-step dilution of a sample is performed, more dispensing tips may be consumed as compared to a normal measurement in which sample dilution is not required. In addition, during device maintenance, a special measurement may be made, such as using only one of multiple types of consumables on the housing container (for example, using only the reaction container). In such a case, in order to efficiently use the above-mentioned consumables, it is required to manage a usage state for each type of the consumables in the same housing container.

### Solution to Problem

An automatic analyzer according to one aspect of the present invention includes: a housing container holder portion that holds a housing container housing a consumable; a transport mechanism that transports the consumable housed in the housing container; and a controller, in which the housing container contains a first consumable and a second consumable, and the controller determines a usage state of the housing container relating to the first consumable and a usage state of the housing container relating to the second consumable, determines whether or not the first consumable housed in the housing container is usable based on the usage state of the housing container relating to the first consumable, and determines whether or not the second consumable housed in the housing container is usable based on the usage state of the housing container relating to the second consumable.

### Advantageous Effect

An automatic analyzer in which a consumable is appropriately managed and efficiently used is provided.

Other technical problems and novel characteristics will be apparent from a description of the present description and the accompanying drawings.

### Brief Description of Drawings

[Fig. 1] Fig. 1 is a schematic diagram illustrating an automatic analyzer.
[Fig. 2] Fig. 2 is a schematic diagram illustrating a consumable transport unit and peripheral units thereof.
[Fig. 3] Fig. 3 illustrates an example of a housing state of a dispensing tip and a reaction container in a housing container.
[Fig. 4] Fig. 4 is a diagram illustrating a transport order (supply order) of consumables.
[Fig. 5] Fig. 5 is a flowchart illustrating a process of determining a usage state of a housing container.
[Fig. 6] Fig. 6 is a management table of housing container usage priorities.
[Fig. 7] Fig. 7 illustrates an example of a housing state of a dispensing tip and a reaction container in the housing container.
[Fig. 8] Fig. 8 is a diagram illustrating a housing state, a usage state, and a usage priority of a housing container.
[Fig. 9] Fig. 9 is a schematic diagram illustrating the consumable transport unit and peripheral units thereof.
[Fig. 10] Fig. 10 is a flowchart illustrating a process of transporting a consumable to a temporary housing unit.
[Fig. 11] Fig. 11 is a flowchart illustrating a specific example of the process of transporting a consumable to the temporary housing unit.
[Fig. 12] Fig. 12 is a diagram illustrating a specific example of transporting a consumable to the temporary housing unit.

### Description of Embodiments

Hereinafter, an automatic analyzer of the present embodiment will be described with reference to the drawings. Examples of the automatic analyzer include a biochemical automatic analyzer, an immunological automatic analyzer, and the like. However, these analyzers are examples of the invention, the invention is not limited to the embodiments to be described below, and extensively includes a device that causes a sample to react with a reagent and analyzes the sample based on a reaction result. For example, the invention may include a mass spectrometer used for a clinical examination and a coagulation analysis device that measures blood clotting time. In addition, the invention may also be applied to a combined system that combines the mass spectrometer and the coagulation analysis device with the biochemical automatic analyzer and immunological automatic analyzer, or an automatic analysis system to which these devices are applied.

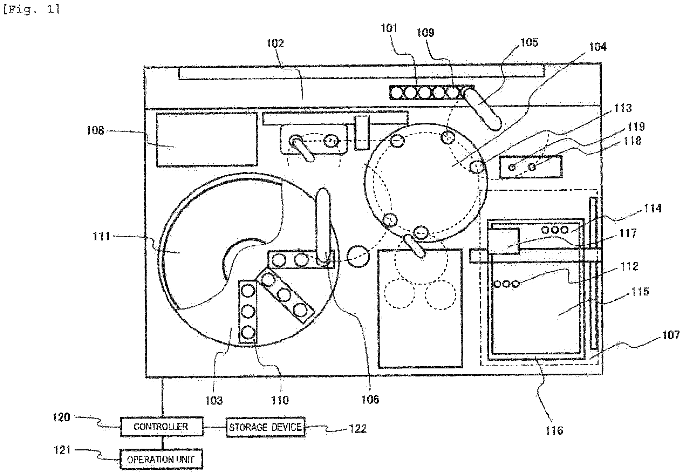

Fig. 1 is a schematic configuration diagram of an automatic analyzer. The automatic analyzer includes a rack transport line 102 on which a rack 101 is transported, a reagent cold-retaining unit 103, an incubator (reaction disk) 104, a sample dispensing mechanism 105, a reagent dispensing mechanism 106, a consumable transport unit 107, and a detecting unit 108.

The rack 101 houses a plurality of sample containers 109 each storing a biological sample (sample, analyte, specimen) such as blood and urine. The rack 101 housing the sample containers 109 is transported on the rack transport line 102. The reagent cold-retaining unit 103 is a reagent container retaining portion and houses and cold-retains a plurality of reagent containers 110 each storing a reagent used for sample analysis. At least a part of an upper surface of the reagent cold-retaining unit 103 is covered by a reagent disk cover 111. The incubator 104 includes reaction container disposing portions 113 in which a plurality of reaction containers 112 for causing a sample to react with a reagent are respectively disposed, and a temperature adjustment mechanism that adjusts a temperature of the reaction container 112 disposed in the reaction container disposing portion 113 to a desired temperature. The sample dispensing mechanism 105 includes a rotation drive mechanism and an up and down drive mechanism, and dispenses, by these drive mechanisms, the sample from the sample container 109 to the reaction container 112 stored in the incubator 104. In particular, in a case where it is desired to prevent contamination between samples, the sample is dispensed in a state where a dispensing tip is mounted to a tip of a sample probe of the sample dispensing mechanism 105. Similarly, the reagent dispensing mechanism 106 includes a rotation drive mechanism and an up and down drive mechanism, and dispenses, by these drive mechanisms, the reagent from the reagent container 110 to the reaction container 112 stored in the incubator 104. The detecting unit 108 includes a photomultiplier tube or a light source lamp, a spectrometer, and a photo diode, has a function of adjusting temperatures thereof, and analyzes a reaction solution.

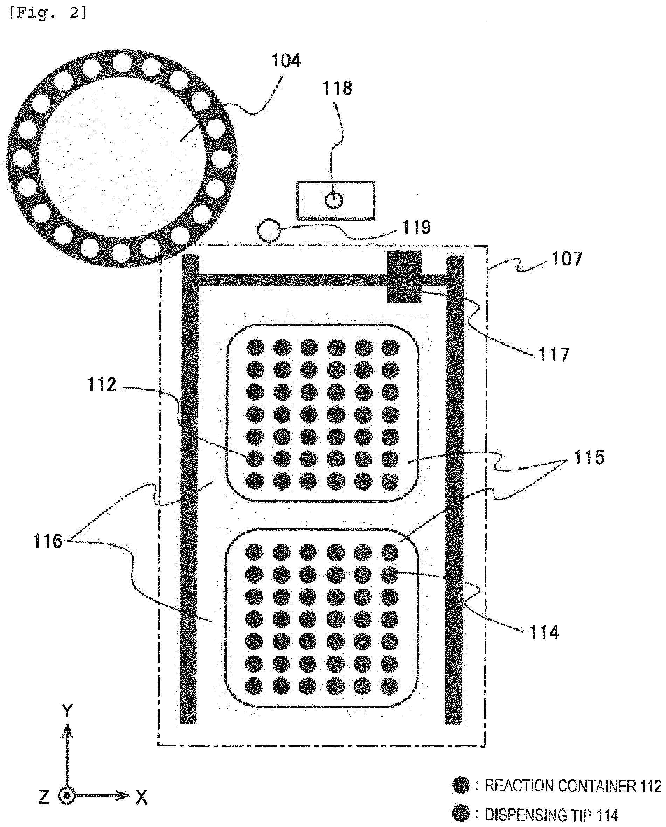

Fig. 2 shows a schematic diagram illustrating details of the consumable transport unit 107 and peripheral units thereof. The consumable transport unit 107 includes housing containers 115 each housing a plurality of unused reaction containers 112 and dispensing tips 114, housing container holder portions 116 that respectively hold the housing containers 115, and a transport mechanism 117 that grips and transports the dispensing tip 114 or the reaction container 112 housed in the housing container 115. The consumable transport unit 107 is provided with a plurality of (two in the example of Fig. 2) housing container holder portions 116. In this example, the reaction containers 112 are housed in a left half area of the housing container 115, and the dispensing tips 114 are housed in a right half area.

The transport mechanism 117 is provided so as to be movable in X-axis, Y-axis, and Z-axis directions (not shown), and transports the reaction container 112 housed in the housing container 115 to the incubator 104 or transports the dispensing tip 114 to a dispensing tip supply position 118. A used reaction container on the incubator 104 is discarded in a waste hole 119.

The housing container holder portion 116 can be taken out from the automatic analyzer independently of other mechanisms, and if the transport mechanism 117 is not accessing the housing container 115, a user can take out the housing container holder portion 116 and replace the housing container 115. It is desirable to provide a lock mechanism on the housing container holder portion 116, so that when the transport mechanism 117 is accessing the housing container 115, the lock mechanism prevents the housing container holder portion 116 from being taken out. The housing container holder portion 116 includes a sensor that detects whether or not the housing container 115 is provided, and can detect whether or not the housing container 115 is held by the housing container holder portion 116. Further, the automatic analyzer includes a sensor that detects a taking-out operation of the housing container holder portion 116, and also monitors the presence or absence of the taking-out operation performed by the user.

In the automatic analyzer, the rack transport line 102, the reagent cold-retaining unit 103, the incubator 104, the sample dispensing mechanism 105, the reagent dispensing mechanism 106, the consumable transport unit 107, and the detecting unit 108 described above are referred to as analysis operation units. Further, the automatic analyzer includes, in addition to the analysis operation units, an operation unit 121 and a controller 120 that controls operations of the entire automatic analyzer. The controller 120 is configured by, for example, a hardware substrate and a computer, and is connected to a storage device 122 such as a hard disk. The operation unit 121 includes a display device that is a display and an input device such as a mouse and a keyboard. The storage device 122 stores, for example, a temperature range or the like corresponding to each unit. The controller 120 may be configured by a dedicated circuit substrate as hardware, or may be configured by software to be executed by the computer. In the case of being configured by hardware, the controller 120 can be implemented by integrating a plurality of calculators, that execute processing, on a wiring substrate or in a semiconductor chip or a package. In the case of being configured by software, the controller 120 can be implemented by mounting a high-speed general-purpose CPU on a computer and executing a program that executes desired calculation processing. It is also possible to upgrade an existing device by a recording medium on which the program is recorded. These devices, circuits, and computers are connected by a wired or wireless network, and appropriately transmit and receive data.

### [Embodiment 1]

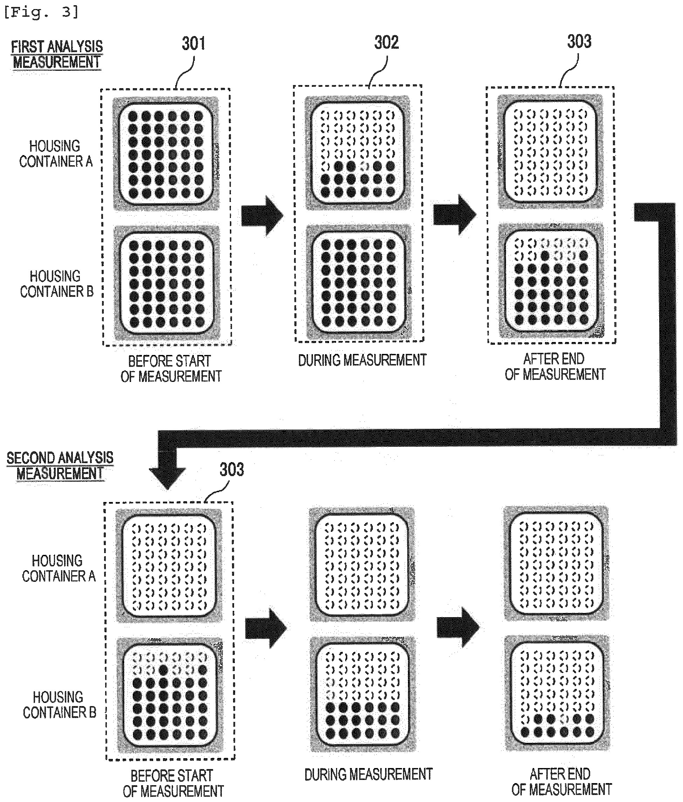

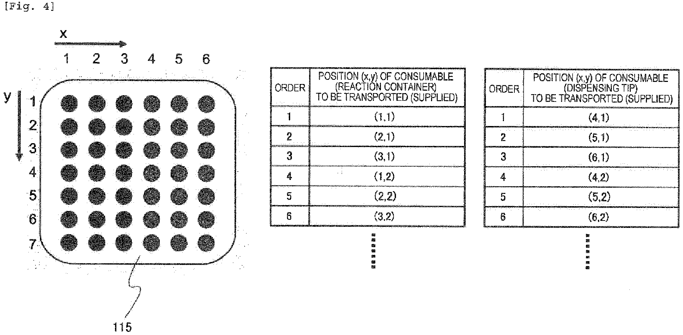

Hereinafter, a method for managing a consumable in an automatic analyzer according to Embodiment 1 will be described. The example shown in Fig. 2 in which the two housing containers 115 can be provided will be described. Fig. 3 shows examples of housing states of the reaction containers 112 and the dispensing tips 114 in the housing container before and after two analysis operations. Fig. 4 shows a transport order of the consumables from the housing container (supply order to the incubator 104 or the dispensing tip supply position 118) . In this example, the housing container 115 has 42 consumable housing positions (hereinafter referred to as "housing positions"), the left half of the housing container 115 houses the reaction container (a first consumable), and the right half of the housing container 115 houses the dispensing tip (a second consumable) used in pairs with the reaction container. Therefore, one housing container is completely filled by housing 21 reaction containers and 21 dispensing tips therein. The reaction containers and the dispensing tips housed in the housing container 115 are respectively transported in the order shown in Fig. 4.

Before the start of a first analysis measurement, both the two housing containers A and B are in a new state 301 (a state of being completely filled with unused consumables (reaction containers 112 and dispensing tips 114)). First, usage is started from the consumables housed in the housing container A (302). In this example, at the end of the first analysis measurement, a housing state of each housing container is a state 303 where a remaining amount of the consumables in the housing container A is zero, and usage of the consumables in the housing container B is started. In a second analysis measurement performed thereafter, the usage of the consumables is started from the state 303, and the usage of the consumables housed in the housing container B is continued.

As the housing state of the consumables in the housing container, the remaining amount of the consumables and the housing position finally accessed by the transport mechanism 117 are stored in the storage device 122 for each consumable type (reaction container/dispensing tip) of each housing container (A/B). The remaining amount is obtained by subtracting a used amount from the remaining amount stored in the storage device 122 each time the consumable is used for an analysis measurement and the like. If the remaining amount of the consumables in the housing container becomes zero during the analysis measurement, the housing container is considered to be empty, and the user is notified of such a situation as an alarm display. Finally, when all the housing containers mounted on the automatic analyzer, both the housing containers A and B in this case are empty, the analysis measurement is stopped. Until then, when the analysis measurement is continuously performed without resetting the housing state of the consumables in the housing container even if the analysis measurement is completed, the consumables are continuously transported from a housing position next to the finally accessed housing position of the housing container, which is stored in the storage device 122.

Next, a method for determining a usage state of the housing container will be described. The usage state of the housing container is determined for each consumable type (reaction container/dispensing tip) of each housing container (A/B), and is stored in the storage device 122 in the same manner as the housing state of the consumables in the housing container. In order to grasp the usage state of the housing container, the automatic analyzer confirms a filling state for each consumable type of each housing container at a predetermined timing to be described later. At that time, the filling states of all the housing positions on the housing container may be confirmed, or only a plurality of predetermined housing positions necessary for determining the usage state may be confirmed. As means for confirming the filling state, a gripping operation of the transport mechanism for the consumable may be used, or a camera may be provided above the housing container and the presence or absence of the consumable may be confirmed based on image analysis. A distance measuring device such as a laser displacement meter may be mounted to the transport mechanism 117, and the presence or absence of the consumables may be confirmed by measuring a distance between the transport mechanism and the housing container.

The controller 120 compares the filling states of the consumables in the housing container that are confirmed at the predetermined timing with the housing states of the consumables in the housing container that are stored in the storage device 122, classifies, depending on the result, the usage state into five states of "none-used (new)", "none-used (old)", "being used", "empty", and "unclear history" for each reaction container and dispensing tip in each housing container, and determines whether or not the consumables is usable according to the state thereof.

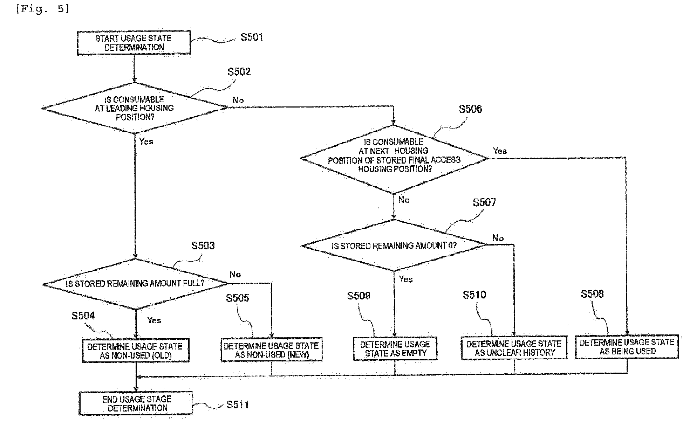

Fig. 5 shows an example of a flowchart for determining the usage state of the housing container. The automatic analyzer performs the determination shown in this flowchart for each consumable type in each housing container to be mounted. First, the automatic analyzer confirms whether or not a consumable is filled in the leading housing position of the housing container (S502) . The leading housing position in the example of Fig. 4 is (1, 1) when the consumable is the reaction container, and is (4, 1) when the consumable is the dispensing tip. If a consumable is at the leading housing position, this housing container is recognized as unused. Next, the automatic analyzer determines whether or not the remaining amount of the consumable stored in the storage device 122 is a full amount (21 in the example of Fig. 4) (S503). If yes, the automatic analyzer determines that the housing container is in an unused state at a stage of a previous analysis measurement, that is, the housing container is "none-used (old) " (S504) . If not, the automatic analyzer determines that the housing container is replaced with a new housing container after the previous analysis measurement, that is, the housing container is "none-used (new)" (S505).

If the automatic analyzer determines in step S502 that the consumable is not filled in the leading housing position, the automatic analyzer can recognize that the housing container is not new. Therefore, the automatic analyzer confirms whether or not the consumable is filled in a housing position next to the finally accessed housing position stored in the storage device 122 (S506) . If such a housing position is filled, the automatic analyzer determines that the housing container is "being used" (S508). If not, the automatic analyzer determines whether or not the remaining amount of the consumable stored in the storage device 122 is 0 (S507) . Here, the automatic analyzer determines that the housing container is "empty" if the remaining amount of the consumable is 0 (S509), and determines that the filling state is operated by the user and is "unclear history" if the remaining amount of the consumable is not 0 (S510).

Here, regarding the container determined to be "unclear history", it is desirable to notify the user of such a situation as an alarm display and urge the user to replace the housing container with a new housing container, or that the automatic analyzer automatically discard the consumable on the housing container. This is because the reaction container and the dispensing tip are operated by the user, which may damage the reaction container and cause the transport mechanism to fail in gripping, or a tip of the dispensing tip may be blocked and dispensing may not be performed accurately.

For example, when the housing container holder portion 116 is taken out from the automatic analyzer by the user during standby of the automatic analyzer in which the analysis measurement is not performed, the usage state determination is performed during a preparatory operation before the start of the analysis measurement. When the housing container holder portion 116 is taken out by the user during the preparatory operation, the usage state determination may be performed immediately after the start of the analysis measurement. By performing this determination when the housing container holder portion 116 is taken out, it is possible to confirm whether or not the filling state of the housing container is operated by the user each time.

Further, as one of the device maintenance, an item for determining the usage state may be provided. As a result, even at times other than the above timing, the user can confirm the usage state at that time by executing this item.

Further, it is desirable to store the timing (date and time) when the usage state is determined into the storage device 122 together with the determination result. This is to prevent old consumable from remaining and being used in a deteriorated state from the viewpoint of reliability of analysis performance. When not all the consumables on the housing container are consumed even after a certain period of time has passed from the replacement with a new housing container, the user may be notified of such a situation by an alarm display and may be urged to replace the housing container, or the automatic analyzer may automatically discard all the consumables in the housing container, or may stop use of the housing container. From the viewpoint of usability, it is preferable that the user can freely set a certain period for urging the replacement of the consumable within a period of quality assurance. At the same time, it is preferable that the user can select a method for processing the consumable after the lapse of the certain period.

The above-described methods for managing and determining the usage state of the housing container are merely examples. For example, in addition to the above classifications of the usage state, for example, classifications such as "being used (new)" and "being used (old)" may be provided.

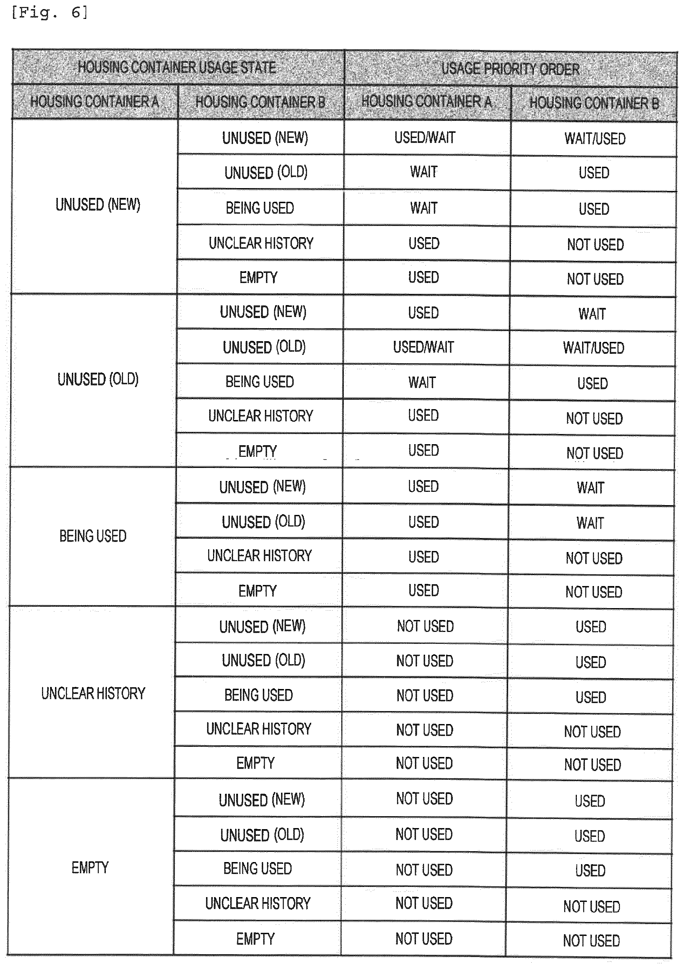

When the automatic analyzer includes a plurality of housing containers, the usage priority is determined for each housing container based on the determined usage state. Fig. 6 is an example of a priority management table when two housing containers are provided. There is a priority management table for each consumable type, that is, for the reaction container and the dispensing tip. In this example, the priority is set based on two rules, "use from an old consumable" and "do not use if the usage state is empty or unclear history". If both containers are "none-used (new) " or both are "none-used (old) ", the usage priority may be determined based on the elapsed time from the replacement of the housing container stored in the storage device 122.

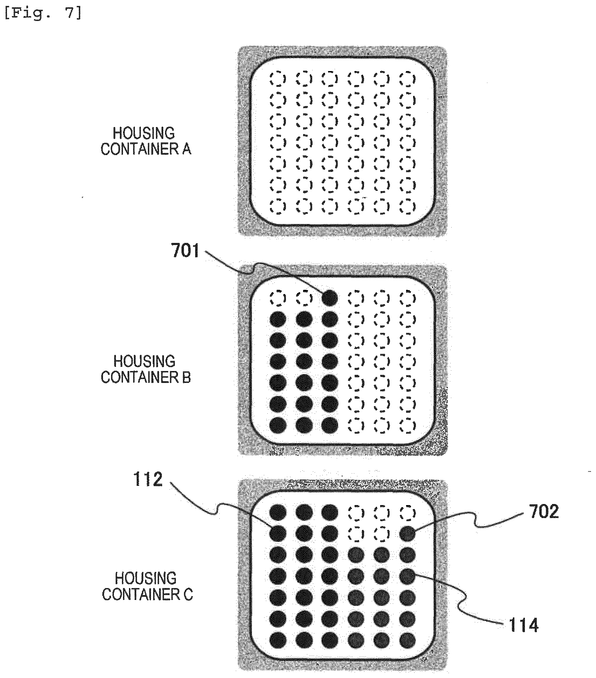

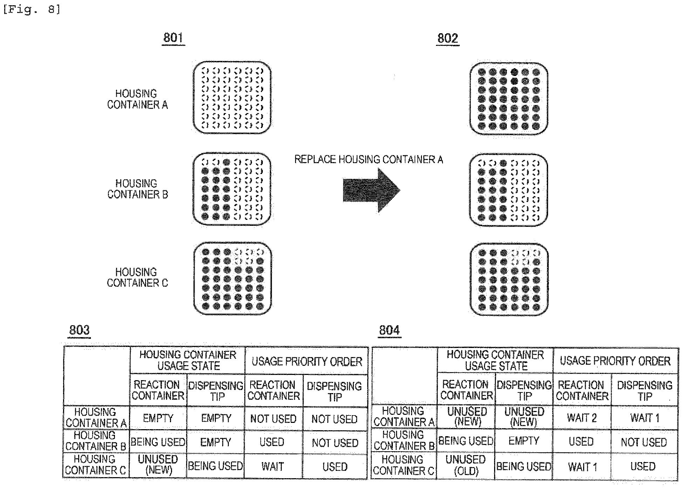

A method for managing a usage order of the consumable based on such a usage priority will be- described by taking the automatic analyzer in which three housing containers 115 can be provided as an example. Fig. 7 shows the housing states of the dispensing tips and the reaction containers in housing containers A to C. For the reaction container 112, the next accessed housing position is 701 (a third housing position of the housing container B), and for the dispensing tip 114, the next accessed housing position is 702 (a sixth housing position of the housing container C) . The housing container A is "empty" for both the reaction containers and the dispensing tips. In the housing container B, the reaction containers are "being used" and the dispensing tips are "empty". Further, in the housing container C, the reaction containers are "none-used (new)" and the dispensing tips are "being used". Here, when the user replaces the housing container A with a new housing container, the automatic analyzer detects that the housing container holding portion is taken out and checks the filling state of the consumable for the housing containers A to C. According to the flowchart of Fig. 5, the usage state of the housing container is determined, and the usage priority on the management table shown in Fig. 6 is updated based on a latest usage state. Fig. 8 shows the housing states, usage states, and usage priorities of reaction containers and dispensing tips in each housing container before and after the replacement of the housing container A. 801 is the housing state in each housing container before replacement, and 802 is the housing state in each housing container after replacement. 803 shows the usage state and the usage priority of each housing container before replacement, and 804 shows the usage state and the usage priority of each housing container after replacement. With the replacement of the housing container A, the usage states of both reaction containers and dispensing tips in the housing container A are updated from "empty" to "none-used (new) ". The usage state of the reaction containers in the housing container C is updated from "none-used (new) " to "none-used (old) ". With the update of the usage state, the usage priority for each housing container will be redefined. After the replacement, the usage state of the dispensing tips in the housing container A is updated from "none-used" to "standby 1". On the other hand, since the usage state of the reaction containers in the housing container C ("none-used (old) ") is kept being "standby 1", the usage state of the reaction containers in the housing container A ("none-used (new)") is updated to "standby 2". That is, when the housing container B is empty, the reaction containers in the housing container C re used first instead of those in the housing container A.

As described above, according to the present embodiment, even if the timing at which the remaining amount of each consumable is zero is different, the usage state and usage priority of each housing container can be appropriately managed.

### [Embodiment 2]

Next, a method for managing a consumable in an automatic analyzer according to Embodiment 2 will be described. In the present embodiment, in addition to the housing container holder portion that holds the housing container, a temporary housing unit that temporarily holds the consumable is provided. In the case of Embodiment 1, when the remaining amounts of the plurality of types of consumables filled in the same housing container are not consistent, for example, if either one of the dispensing tip and the reaction container is empty and the other is being used, it is necessary for the user to wait until both the consumables are empty and replace the housing container in order to avoid loss of the consumables. Therefore, in the present embodiment, it is possible to reduce the inconsistence in remaining amounts among the consumable types by transporting the being-used consumables to the temporary housing unit 901 when the remaining amounts are consistent. As a result, the user does not have to wait for a long time before replacement of the housing container.

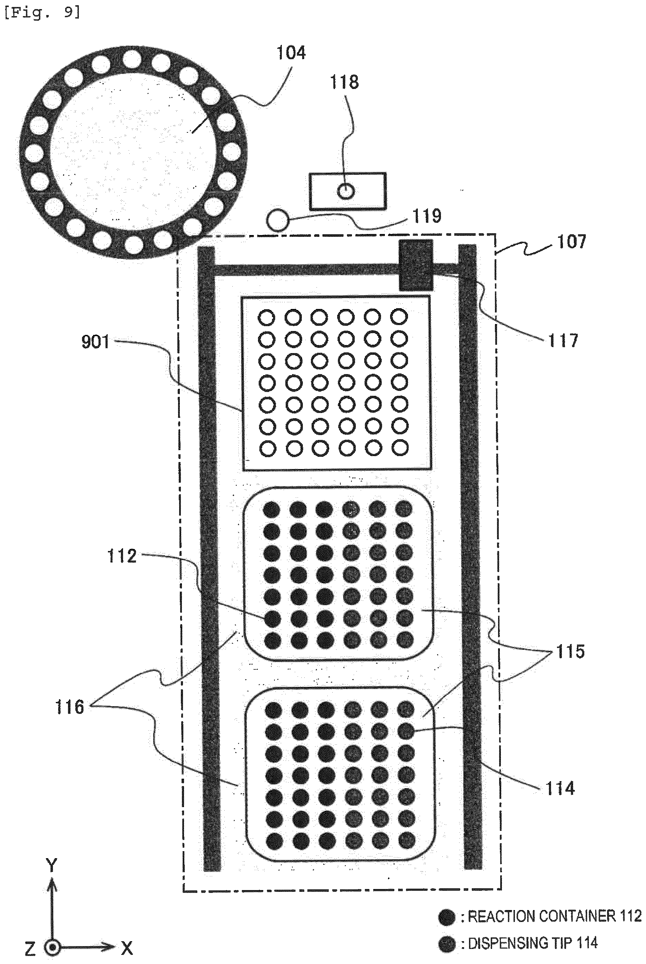

Fig. 9 shows a schematic diagram illustrating details of the consumable transport unit 107 and peripheral units thereof in the present embodiment. The consumable transport unit 107 includes the housing containers 115 each housing a plurality of unused reaction containers 112 and dispensing tips 114, the housing container holder portions 116 that respectively hold the housing containers 115, the temporary housing unit 901 that temporarily holds the reaction container or the dispensing tip, and the transport mechanism 117 that grips and transports the dispensing tip 114 or reaction container 112 stored in the housing container 115 or the temporary housing unit 901. The operation of the transport mechanism 117 is the same as that of Embodiment 1, but the reaction containers or the dispensing tips filled in the housing container 115 are also transported to the temporary housing unit 901.

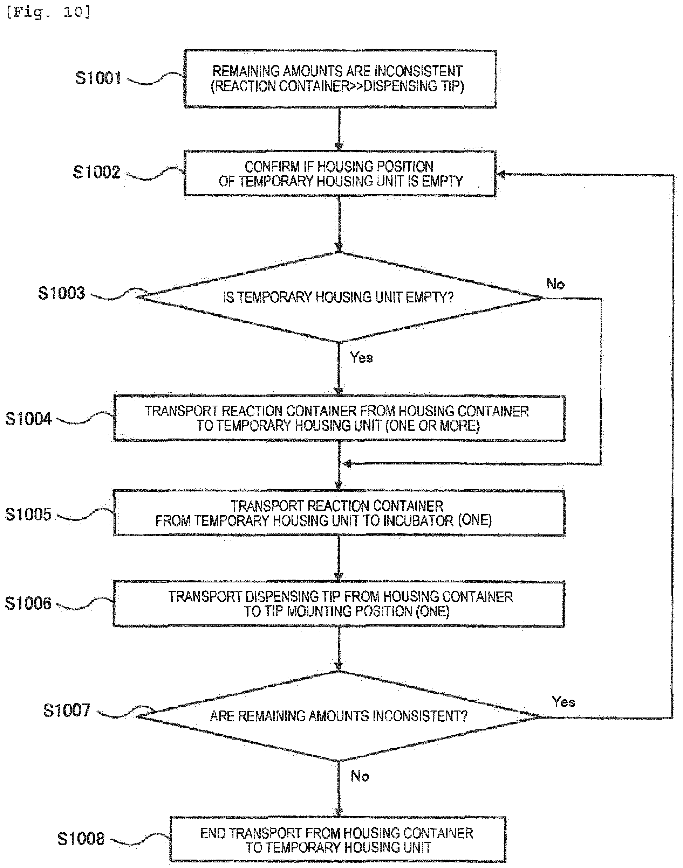

Fig. 10 shows a flowchart illustrating a process of transporting a consumable to the temporary housing unit 901. For example, a case where more reaction containers remain in the being-used housing container than the dispensing tips is taken as an example. The automatic analyzer confirms the presence or absence of an empty housing position in the temporary housing unit 901 (S1002). If it is determined in step S1003 that there is an empty housing position, at least one reaction container is transported from the being-used housing container 115 to the temporary housing unit 901 (S1004) . At- this time, in order to eliminate the inconsistence in the remaining amounts as soon as possible, it is advisable to transport as many consumables (reaction containers) as possible to the temporary housing unit in one analysis cycle (a unit that executes one inspection item). The number of reaction containers to be transported may be determined according to the number of the empty housing positions in the temporary housing unit 901 and a difference between the remaining amount of the dispensing tips and the remaining amount of the reaction containers. Information on the usage state of each housing container is also inherited after the reaction containers are transported to the temporary housing unit 901. When a reaction container is to be used, the reaction container is transported from the temporary housing unit 901 to an incubator (S1005) . When a dispensing tip is to be used, the dispensing tip is transported from the housing container 115 to the dispensing tip supply position 118 (S1006) . In step S1007, the automatic analyzer confirms whether there is a difference between the remaining amount of the dispensing tips and the remaining amount of the reaction containers, and if there is a difference, the dispensing tips or the reaction containers also transported to the temporary housing unit 901 in a next analysis cycle. If there is no difference between the remaining amounts, the transportation to the temporary housing unit 901 ends (S1008).

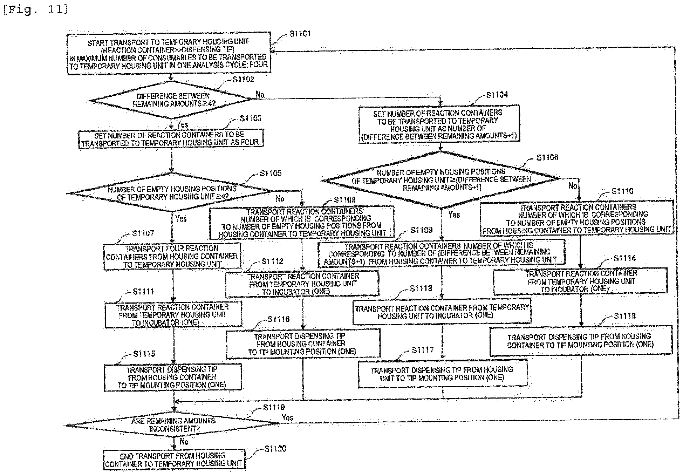

Fig. 11 is a flowchart illustrating a more specific example of the process of transporting a consumable to the temporary housing unit 901. In Fig. 11, it is assumed that a maximum number of the consumables that can be transported to the temporary housing unit 901 in one analysis cycle is four. In this case, a case where more reaction containers remain in the being-used housing container than the dispensing tips is also taken as an example. First, the automatic analyzer checks whether the difference between the remaining amount of the dispensing tips and the remaining amount of the reaction containers is equal to or greater than the maximum transportable number (4 or more) (S1102). Here, if the difference is less than the maximum transportable number (less than 4), the automatic analyzer sets the number of the reaction containers to be transported to the temporary housing unit 901 to (difference between remaining amounts + 1) (S1104) . If the difference is equal to or greater than the maximum transportable number (4 or more), the automatic analyzer sets the number of reaction containers to be transported to the maximum transportable number (4) (S1103). Next, the automatic analyzer compares the set transport number with the number of the empty housing positions in the temporary housing unit (S1105, 1106), and if the number of the empty housing positions is equal to or greater than the set transport number, the automatic analyzer does not change the set transport number (S1107, 1109), and if the number of the empty housing positions is less than the set transport number, the automatic analyzer changes the setting such that reaction containers the number of which is corresponding to the number of the empty housing positions is transported (S1108, 1110). Subsequent transport of the reaction containers to the incubator (S1111 to 1114) and transport of the dispensing tips to the tip mounting position (S1115 to 1118) are the same as in Fig. 10.

In step S1104, the transport number is set to (difference between remaining amounts + 1) based on that the reaction containers are transported from the temporary housing unit in step S1113 and the dispensing tips are transported from the housing container in step S1117. That is, the remaining amounts in the housing container can be made equal by reducing the number of dispensing tips by one in the subsequent stage.

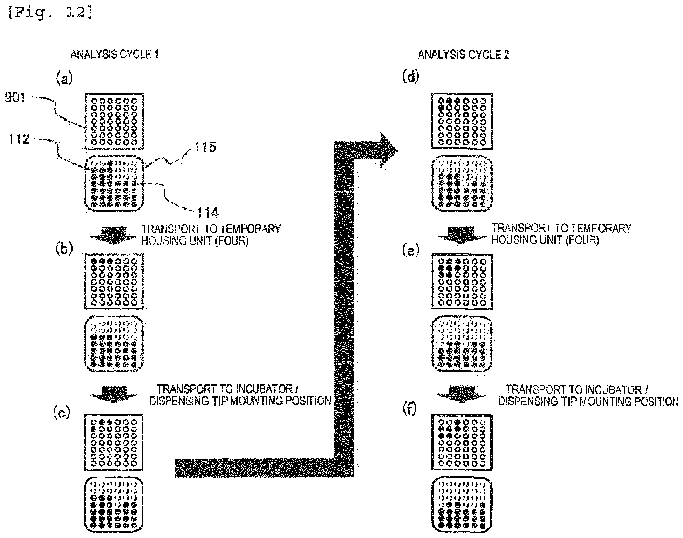

Fig. 12 shows a specific example of transporting a consumable to the temporary housing unit 901. It is assumed that the transport is performed according to the flowchart of Fig. 11, and the maximum number of the consumables that can be transported to the temporary housing unit 901 in one analysis cycle is four. Here, in an initial state of analysis cycle 1, the remaining amount of the dispensing tips is 7 less than the remaining amount of the reaction containers (state a). Here, the number of reaction containers to be transported to the temporary housing unit 901 is to be set. Since the difference between the remaining amounts of the consumables (7) is equal to or greater than the maximum number of the consumables that can be transported to the temporary housing unit (4), the transport number to the temporary housing unit is set to 4. Next, in the comparison between the set transport number and the number of the empty housing positions in the temporary housing unit, the number of the empty housing positions is equal to or greater than the set transport number (4), so that the set transport number is not changed and remains at 4. Therefore, the set transport number is determined, and four, which is the set transport number, reaction containers are transported to the temporary housing unit 901 (state b) . After the four reaction containers are transported to the temporary housing unit, the reaction container and the dispensing tip are transported to the incubator and a tip transport position for analysis, respectively. At this time, the reaction container is transported from the temporary housing unit instead of the housing container. On the other hand, the dispensing tip is transported from the housing container. As a result, at the end of analysis cycle 1, the difference between the remaining amounts of the consumables in the housing container decreased by 3 from before the start of analysis cycle 1 and is changed into 4. By carrying out the same transport flow in the analysis cycle 2, the difference between the remaining amounts is eliminated at the end of the analysis cycle 2. In this way, the reaction containers and the dispensing tips on the housing container can be reduced at the same timing, and the user can promptly replace the housing container with a new one as soon as the total amount is exhausted.

The same management method as that for the housing container described in Embodiment 1 can be applied (see Fig. 5) to the management of the remaining amounts of the consumables in the temporary housing unit 901. That is, when the housing container holder portion 116 is taken out from the automatic analyzer by the user, the filling state is confirmed by using the gripping operation of the transport mechanism and the image analysis during the preparatory operation before the analysis measurement. At that time, the filling states of all the housing positions of the temporary housing unit may be confirmed, or only a plurality of predetermined housing positions may be confirmed. The automatic analyzer determines whether the filling state of the temporary housing unit is different from the housing state stored in the storage device. If these states are the same, usage of the consumables stored in the temporary housing unit 901 is continued. On the other hand, if these States are different, the automatic analyzer determines that the filling state is operated by the user, and discards all reaction containers and dispensing tips on the temporary housing unit 901.

### Reference Signs List

- 101:: rack
- 102:: rack transport line
- 103:: reagent cold-retaining unit
- 104:: incubator
- 105:: sample dispensing mechanism
- 106:: reagent dispensing mechanism
- 107:: consumable transport unit
- 108:: detecting unit
- 109:: sample container
- 110:: reagent container
- 111:: reagent disk cover
- 112:: reaction container
- 113:: reaction container disposing portion
- 114:: dispensing tip
- 115:: housing container
- 116:: housing container holder portion
- 117:: transport mechanism
- 118:: dispensing tip supply position
- 119:: waste hole
- 120:: controller
- 121:: operation unit
- 122:: storage device
- 901:: temporary housing unit

## Claims

1. An automatic analyzer comprising:
a housing container holder portion that holds a housing container housing a consumable;
a transport mechanism that transports the consumable housed in the housing container; and
a controller, wherein
the housing container contains a first consumable and a second consumable, and
the controller determines a usage state of the housing container relating to the first consumable and a usage state of the housing container relating to the second consumable, determines whether or not the first consumable housed in the housing container is usable based on the usage state of the housing container relating to the first consumable, and determines whether or not the second consumable housed in the housing container is usable based on the usage state of the housing container relating to the second consumable.

2. The automatic analyzer according to claim 1, wherein
the housing container holder portion is capable of holding a first housing container and a second housing container, and
the controller assigns priorities to the first housing container and the second housing container based on the usage state of the first housing container and the usage state of the second housing container and uses a consumable housed in a housing container having a higher priority.

3. The automatic analyzer according to claim 2, wherein
the first consumable and the second consumable are used in pairs,
the automatic analyzer further includes a storage device that stores a usage state of the first housing container and a usage state of the second housing container relating to the first consumable and a usage state of the first housing container and a usage state of the second housing container relating to the second consumable,
the controller determines which pair is to be used among a pair of the first consumable housed in the first housing container and the second consumable housed in the first housing container, a pair of the first consumable housed in the first housing container and the second consumable housed in the second housing container, a pair of the first consumable housed in the second housing container and the second consumable housed in the first housing container, and a pair of the first consumable housed in the second housing container and the second consumable housed in the second housing container.

4. The automatic analyzer according to claim 1, wherein
the controller causes a storage device to store a housing state of the consumable in the housing container at the end of analysis measurement, and
in a case where the controller determines a usage state of the housing container after the analysis measurement, the controller determines the usage state of the housing container by comparing a filling state of the consumable in the housing container to the housing state of the consumable in the housing container that is stored in the storage device, and determines whether or not the consumable housed in the housing container is usable based on the usage state of the housing container.

5. The automatic analyzer according to claim 4, wherein
the controller causes the storage device to store a remaining amount of the consumable filled in the housing container and a housing position of the housing container that is finally accessed by the transport mechanism as the housing state of the consumable in the housing container at the end of analysis measurement, and
in a case where the controller determines a usage state of the housing container after the analysis measurement, the controller determines the usage state of the housing container by comparing the filling state of the consumable in the housing container to the remaining amount of the consumable filled in the housing container and the housing position of the housing container that is finally accessed by the transport mechanism, the remaining amount and the housing position being stored in the storage device.

6. The automatic analyzer according to claim 4, wherein
in a case where the controller detects that the housing container holder portion is taken out, the controller determines a usage state of the housing container by comparing a filling state of the consumable in the housing container to the housing state of the consumable in the housing container that is stored in the storage device, and updates a priority of the housing container based on the usage state of the housing container.

7. The automatic analyzer according to claim 1, wherein
the consumable housed in the housing container is a reaction container that causes a sample and a reagent to react with each other or a dispensing tip that is mounted on a tip of a sample probe of a sample dispensing mechanism.

8. The automatic analyzer according to claim 1, further comprising
a temporary housing unit that temporarily houses the first consumable or the second consumable, wherein
in a case where a remaining amount of the first consumable filled in the housing container is more than a remaining amount of the second consumable filled in the housing container, the controller causes the transport mechanism to transport the first consumable from the housing container to the temporary housing unit and uses the first consumable from the temporary housing unit.

9. The automatic analyzer according to claim 8, wherein
the controller compares the remaining amount of the first consumable filled in the housing container to the remaining amount of the second consumable filled in the housing container per analysis cycle.

10. The automatic analyzer according to claim 9, wherein
in a case where a difference between the remaining amount of the first consumable and the remaining amount of the second consumable is less than a maximum number of consumables to be transportable from the housing container to the temporary housing unit in one analysis cycle, the controller causes the transport mechanism to transport the first consumables the number of which is corresponding to (the difference between the remaining amount of the first consumable and the remaining amount of the second consumable + 1) to the temporary housing unit.

11. The automatic analyzer according to claim 8, wherein the controller causes a storage device to store a housing state of each of the first consumable and the second consumable in the housing container and the temporary housing unit at the end of analysis measurement, and
in a case where the controller determines a usage state of the housing container after the analysis measurement, the controller determines a usage state of the housing container and the temporary housing unit by comparing a filling state of each of the first consumable and the second consumable in the housing container and the temporary housing unit to the housing state of each of the first consumable and the second consumable in the housing container and the temporary housing unit that is stored in the storage device, and determines whether or not each of the first consumable and the second consumable housed in the housing container and the temporary housing unit is usable based on the usage state of the housing container and the temporary housing unit.

12. The automatic analyzer according to claim 11, wherein the controller causes the storage device to store a remaining amount of each of the first consumable and the second consumable filled in the housing container and the temporary housing unit and a housing position of the housing container that is finally accessed by the transport mechanism as the housing state of each of the first consumable and the second consumable in the housing container and the temporary housing unit at the end of the analysis measurement, and
in a case where the controller determines a usage state of the housing container after the analysis measurement, the controller determines the usage state of the housing container and the temporary housing unit by comparing the filling state of each of the first consumable and the second consumable in the housing container and the temporary housing unit to the remaining amount of each of the first consumable and the second consumable filled in the housing container and the temporary housing unit and the housing position of the housing container and the temporary housing unit that is finally accessed by the transport mechanism, the remaining amount and the housing position being stored in the storage device.

13. The automatic analyzer according to claim 1, wherein any one of a reaction container that causes a sample and a reagent to react with each other and a dispensing tip that is mounted on a tip of a sample probe of a sample dispensing mechanism is the first consumable and the other is the second consumable.
